# EUROPÄISCHE PATENTSCHRIFT

(11) **EP 2 457 309 B1**
(45) Veröffentlichungstag und Bekanntmachung des Hinweises auf die Patenterteilung: **15.02.2017**
(21) Anmeldenummer: 10729920.8
(22) Anmeldetag: 09.07.2010
(51) Int. Cl.: H02K 5/24

(54) **ANORDNUNG ZUR AKUSTISCHEN ENTKOPPLUNG EINES STATORS EINES ELEKTROMOTORS**
ARRANGEMENT FOR ACOUSTIC DECOUPLING OF A STATOR OF AN ELECTRIC MOTOR
ENSEMBLE POUR LE DÉCOUPLAGE ACOUSTIQUE D'UN STATOR D'UN MOTEUR ÉLECTRIQUE

(30) Priorität: 21.07.2009 DE 102009027872
(43) Veröffentlichungstag der Anmeldung: 30.05.2012
(73) Patentinhaber: Brose Fahrzeugteile GmbH & Co. Kommanditgesellschaft, Würzburg, 97076 Würzburg (DE)
(72) Erfinder: KESSLER, Bernhard, 97705 Burkardroth (DE); FINGER, Christian, 97688 Bad Kissingen (DE); SCHUMPA, Christian, 97320 Grosslangheim (DE); WANG, Zhiguo, 80997 München (DE)
(74) Vertreter: Isarpatent
(86) Internationale Anmeldenummer: PCT/EP2010/059878
(87) Internationale Veröffentlichungsnummer: WO 2011/009739

(56) Entgegenhaltungen:
- DE-A1- 4 109 814
- DE-A1-102006 048 526
- US-A- 4 593 223
- US-A- 5 196 749

## Beschreibung

Die vorliegende Erfindung betrifft eine Anordnung zur akustischen Entkopplung eines Stators eines Elektromotors.

Die Akustik oder der erzeugte Körperschall eines Elektromotors bilden in vielen Anwendungsfällen, wie zum Beispiel bei Verwendung des Elektromotors zur Lenkkraftunterstützung in Lenksystemen von Kraftfahrzeugen, ein wesentliches Produktmerkmal. Je nach Gestaltung des elektromagnetischen Kreises werden in Elektromotoren Schwingungen unterschiedlicher Art (axial, radial, tangential und/oder rotatorisch) und Stärke verursacht. Die Auslegung des elektromagnetischen Kreises des Elektromotors, welche hauptsächlich durch die Nutanzahl des Stators, die Polpaarzahl des Rotors, die verwendete Magnettechnologie, zum Beispiel Oberflächenmagnete oder Taschenmagnete, und das Wickelschema bestimmt wird, stellt bezüglich der Akustik immer einen Kompromiss zugunsten einer der genannten Schwingungsarten dar. Eine Optimierung aller relevanten Schwingungsarten kann folglich nur teilweise durch die elektromagnetische Auslegung erreicht werden. Herkömmliche Motorkonstruktionen haben meist eine starre Verbindung zwischen dem Stator und einem den Stator aufnehmenden Gehäuse. Dadurch werden alle Schwingungen, welche durch die elektromagnetische Auslegung des Elektromotors nicht unterdrückt werden konnten, direkt in das Gehäuse und die daran anliegenden Maschinenteile eingeleitet, was zu hoher Geräuschentwicklung führt. Ein derart hoher Geräuschpegel ist aber bei vielen Anwendungen nicht akzeptabel.

Es ist bekannt, die durch die elektromagnetische Auslegung des Elektromotors nicht oder nur teilweise unterdrückten Schwingungsarten oder -anteile durch strukturmechanische Maßnahmen, wie zum Beispiel Entkopplung oder Dämpfung, zu optimieren.

Die DE 10 2006 048 526 A1 beschreibt einen Elektromotor, mit einer Elektroeinheit, aufweisend wenigstens einen Stator, einen Rotor, eine Rotorwelle und ein Lager für die Rotorwelle. Des Weiteren weist der Elektromotor ein Gehäuse auf, in welches die Elektroeinheit einschiebbar ist. Zur axialen Ausrichtung und Abstützung der Elektroeinheit in dem Gehäuse ist wenigstens ein um die Elektroeinheit umlaufender O-Ring vorgesehen.

Die DE 41 09 814 A1 beschreibt einen Ständer für eine elektrische Maschine. Zur Erhöhung der Schalldämpfung ohne Verwendung einer Kapselung für die Maschine weist das tragende Teil des Ständergehäuses ein Rohr auf, auf dessen Innenseite über einen Blechpaketsitz das Blechpaket befestigt ist, wobei die Rohrwandung auf ihrem Umfang verteilte Durchbrüche aufweist. Die Schalldämpfung läßt sich noch dadurch verbessern, daß die Rohrwandung des Rohres mindestens teilweise von einer nichttragenden Wandung des Ständergehäuses umgeben ist.

Aus der Druckschrift DE 10 2004 050 743 A1 ist eine vibrationsarme Vakuumpumpe bekannt, bei welcher der Motorstator mit Hilfe von elastischen Bauelementen, zum Beispiel Elastomerringen, im Gehäuse der Vakuumpumpe aufgehängt ist, was zu einer schwingungstechnischen Entkopplung des Motorstators führt.

Bei der Entkopplung mit elastischen Teilen ist es jedoch schwierig, einerseits eine ausreichende akustische Entkopplung und andererseits eine ausreichende Fixierung und Zentrierung des Stators im Motorgehäuse zu realisieren.

Aufgabe der vorliegenden Erfindung ist es daher, eine Anordnung zur akustischen Entkopplung eines Stators eines Elektromotors anzugeben, welche einerseits eine ausreichende akustische Entkopplung und andererseits eine ausreichende Fixierung und Zentrierung des Stators in einem den Stator umgebenden Gehäuse realisiert.

Diese Aufgabe wird gelöst durch eine Anordnung zur akustischen Entkopplung eines Stators eines Elektromotors, die einen in einem Gehäuse, konzentrisch zu einer drehbaren Motorwelle und beabstandet zu einer Innenwand des Gehäuses angeordneten Stator, einen in dem Gehäuse innerhalb des Stators angeordneten und mit der Motorwelle drehfest verbundenen Rotor und zwei beidseitig des Stators und konzentrisch zur Motorwelle angeordnete, im wesentlichen zylinderförmige Entkopplungsringe, welche einerseits jeweils an einer Stirnseite des Stators und andererseits jeweils an dem Gehäuse fixiert sind und auf ihren Umfangsflächen Aussparungen aufweisen.

Die in den Umfangsflächen der Entkopplungsringe vorgesehenen Aussparungen führen zu einem guten Ausgleich der, zum Beispiel durch lokale Deformationen des Stators, erzeugten Schwingungen, so dass diese kaum an das Gehäuse weitergegeben werden.

Gemäß einer Ausführungsform der Erfindung sind die Aussparungen gleichmäßig über die Umfangsfläche der Entkopplungsringe verteilt und/oder in mehreren Spuren zueinander versetzt angeordnet. Durch eine derartige Anordnung der Aussparungen ist eine ausreichende akustische Entkopplung des Stators erreichbar. Grundsätzlich sind jedoch Form, Anzahl und Anordnung der Aussparungen frei wählbar und werden vorzugsweise an die konkrete Zielrichtung, zum Beispiel Entkopplung einer bestimmten Schwingungsart, und die konkreten Einbaubedingungen angepasst. Die Aussparungen erlauben somit eine gezielte akustische Entkopplung.

Gemäß einer weiteren Ausführungsform der Erfindung sind an den dem Stator zugewandten Stirnseiten der Entkopplungsringe jeweils zumindest ein Zapfen oder eine Nut vorgesehen, welche in einer entsprechenden Nut des Stators eingreift bzw. welche einen entsprechenden Zapfen des Stators aufnimmt. Auf diese Weise wird mit geringem Aufwand eine Zentrierung der Entkopplungsringe mit dem Stator erreicht.

Auch an der dem Stator abgewandten Stirnseite eines Entkopplungsringes kann zumindest eine Nut oder ein Zapfen vorgesehen sein, der einen entsprechenden Zapfen des Gehäuses aufnimmt bzw. in eine entsprechende Nut des Gehäuses eingreift. Dadurch wird auf einfache Art und Weise eine Drehlagenfixierung des Entkopplungsringes im Gehäuse realisiert.

Eine weitere Ausführungsform der Erfindung sieht vor, dass die Entkopplungsringe in axialer Richtung der Motorwelle jeweils einen ersten dem Stator zugewandten Teilbereich aufweisen mit einem Außendurchmesser, der kleiner oder gleich dem Außendurchmesser des Stators ist und einen zweiten dem Stator abgewandten Teilbereich mit einem Außendurchmesser, der größer als der Außendurchmesser des Stators ist. Durch diese Ausgestaltung der Entkopplungsringe ist die von der Innenwand des Gehäuses beabstandete und zumindest im Wesentlichen zentrierte Positionierung des Stators zuverlässig und mit geringem Aufwand zu realisieren.

Gemäß einer bevorzugten Ausführungsform der Erfindung ist zumindest einer der Entkopplungsringe fest mit einem Lagerschild verbunden, welches ein Lager der Motorwelle aufnimmt. In einer weiteren Ausführungsform kann zumindest einer der Entkopplungsringe auch einstückig mit dem Lagerschild ausgeführt sein. Auf diese Weise können die Anzahl der Motorbauteile verringert und damit die Herstellkosten gesenkt werden.

Vorteilhaft sind die Entkopplungsringe als Blechteile, insbesondere als gestanzte und gerollte Blechteile ausgeführt. Diese Ausführungsform stellt einen wirtschaftlichen Herstellungsprozess mit wenig Verschnitt dar. Zudem lässt sich durch diesen Herstellungsprozess eine unter Umständen notwendige Durchmesserabstufung, also eine Veränderung des Außendurchmessers von einem ersten Teilbereich des Entkopplungsrings zu einem zweiten Teilbereich des Entkopplungsrings, einfach realisieren.

Die Entkopplungsringe können aber beispielsweise auch als Tiefziehteile ausgeführt sein, was insbesondere dann Vorteile bringt, wenn ein Entkopplungsring einstückig mit einem Lagerschild ausgeführt ist, so dass insgesamt eine topfförmige Komponente zu fertigen ist.

Die vorliegende Erfindung wird nachfolgend anhand der in den Figuren der Zeichnung angegebenen Ausführungsbeispiele näher erläutert. Es zeigen dabei:
- Fig. 1: eine schematische Schnittdarstellung einer ersten Ausführungsform der erfindungsgemäßen Anordnung,
- Fig. 2: eine schematische Darstellung des Stators und der daran fixierten Entkopplungsringe,
- Fig. 3: eine schematische perspektivische Darstellung eines Entkopplungsringes, und
- Fig. 4: eine schematische Darstellung einer zweiten Ausführungsform der erfindungsgemäßen Anordnung.

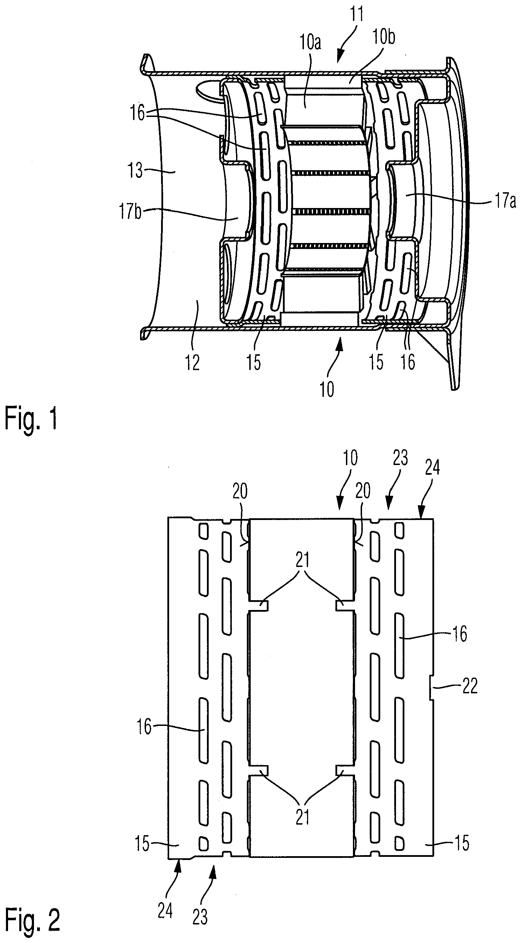

Fig. 1 zeigt eine erste Ausführungsform der erfindungsgemäßen Anordnung in einer perspektivischen Schnittdarstellung. Ein Stator 10 eines Elektromotors 11 ist in einem Gehäuse 12 angeordnet. Der Stator 10 weist in der gezeigten Ausführungsform einen Innenteil 10a und einen Außenteil 10b auf. Der Stator 10 berührt dabei das Gehäuse 12 nicht, sondern ist beabstandet zu einer Innenwand 13 des Gehäuses 12 angeordnet. Innerhalb des Stators 10 ist ein nicht dargestellter Rotor angeordnet, der drehfest mit einer ebenfalls nicht dargestellten drehbaren Motorwelle verbunden ist. Der Stator 10 ist dabei konzentrisch zur Motorwelle angeordnet. Beidseitig des Stators 10 sind jeweils Entkopplungsringe 15 vorgesehen, welche an dem Stator 10, zum Beispiel mit Hilfe einer Schweißverbindung, fixiert oder befestigt sind. Die Entkopplungsringe sind dabei im Wesentlichen zylinderförmig ausgestaltet und setzen die Mantelfläche des Stators 10 in axialer Richtung der Motorwelle im Wesentlichen fort. In einem Teilbereich ihrer Umfangsfläche (vgl. Fig. 2) sind die Entkopplungsringe 15 an dem, im Wesentlichen topfförmigen Gehäuse 12 fixiert. Diese Fixierung kann beispielsweise durch Einpressen, Einschrumpfen oder auch durch eine Klebeverbindung realisiert sein. Aufgrund dieser Anordnung stützen sich die Entkopplungsringe 15 an der Innenwand 13 des Gehäuses 12 ab und positionieren den Stator 10 in Bezug auf die Innenwand 13 des Gehäuses 12 zumindest im Wesentlichen zentriert.

In den Umfangsflächen der Entkopplungsringe 15 sind Aussparungen 16 vorgesehen, welche dazu ausgelegt sind, Schwingungen des Stators 10 auszugleichen, so dass die Schwingungen nicht oder zumindest nur in abgeschwächter Form in das Gehäuse 12 eingeleitet werden und somit der Stator 10 akustisch entkoppelt wird. In der dargestellten Ausführungsform sind Aussparungen 16 in Form von Langlöchern vorgesehen, welche in zwei parallelen Spuren oder Reihen versetzt zueinander und gleichmäßig über die Umfangsfläche der Entkopplungsringe 15 verteilt angeordnet sind. Grundsätzlich sind aber die Form, die Anzahl und die Anordnung der Aussparungen 16 frei wählbar. Da die Ausgleichswirkung der Entkopplungsringe 15 auf Schwingungen des Stators 10 im Wesentlichen von der Form, der Anzahl und der Anordnung der Aussparungen 16 abhängt, wird die Ausgestaltung und die Verteilung der Aussparungen 16 vorteilhaft an die jeweilige Zielsetzung und die jeweiligen Umgebungsbedingungen angepasst. Die Zielsetzung kann dabei dahingehend variieren, dass nur bestimmte Schwingungsformen entkoppelt werden sollen.

Gemäß einer vorteilhaften Ausführungsform der Erfindung sind die Entkopplungsringe 15 als Blechteile ausgeführt, da diese kostengünstig herzustellen sind und eine gute Fixierung und Zentrierung des Stators 10 im Gehäuse 12 sicherstellen. Die Entkopplungsringe 15 können dabei als gestanztes und gerolltes Blechteil ausgeführt sein, was einen besonders wirtschaftlichen Herstellungsprozess mit wenig Verschnitt darstellt. Alternativ dazu können die Entkopplungsringe 15 beispielsweise aber auch als Tiefziehteile ausgeführt sein. Neben Blech sind selbstverständlich auch andere Materialien, wie zum Beispiel Kohlenstoff, für die Entkopplungsringe 15 verwendbar. Ausschlaggebend ist lediglich, dass das verwendete Material geeignet ist, einerseits eine ausreichende Fixierung und Zentrierung des Stators 10 sicherzustellen und andererseits die notwendige Entkopplung des Stators 10 zu realisieren.

In Fig. 1 sind darüber hinaus zwei Lagerschilde 17a und 17b dargestellt, welche jeweils ein nicht dargestelltes Lager der Motorwelle aufnehmen. In der dargestellten Ausführungsform ist ein erstes Lagerschild 17a einstückig mit dem Gehäuse 12 ausgeführt und ein zweites Lagerschild 17b als getrenntes Bauteil, welches fest mit einem der Entkopplungsringe 15 verbunden ist. Möglich ist auch eine einstückige Ausführung deines Entkopplungsringes 15 mit einem Lagerschild 17a, 17b.

Der Stator 10 und die an seinen Stirnseiten 20 befestigten Entkopplungsringe 15 sind in Fig. 2 noch einmal in etwas detaillierter Form dargestellt. Insbesondere sind an den dem Stator 10 zugewandten Stirnseiten der Entkopplungsringe Zapfen 21 erkennbar, welche in entsprechende Nuten des Stators 10 eingreifen und dadurch die Entkopplungsringe 15 mit dem Stator 10 zentrieren. Alternativ können an dem Entkopplungsring 15 auch Nuten vorgesehen sein, in welche dann entsprechende Zapfen des Stators 10 eingreifen.

Außerdem weist zumindest einer der Entkopplungsringe 15, im dargestellten Fall der rechte Entkopplungsring, an der dem Stator 10 abgewandten Stirnseite eine Nut 22 auf, welche einen entsprechenden, nicht dargestellten Zapfen an dem Gehäuse 12 aufnimmt und dadurch eine Drehlagenfixierung im Gehäuse 12 realisiert. Auch dafür kann alternativ am Entkopplungsring 15 auch ein Zapfen vorgesehen sein, der dann in eine entsprechende Nut am Gehäuse 12 eingreift.

In der dargestellten Ausführungsform weisen die Entkopplungsringe 15 keinen gleichmäßigen Außendurchmesser auf. In einem ersten dem Stator 10 zugewandten Teilbereich 23 entspricht der Außendurchmesser im Wesentlichen dem Außendurchmesser des Stators 10. Denkbar ist aber auch ein im Vergleich zum Außendurchmesser des Stators 10 verringerter Außendurchmesser der Entkopplungsringe 15. In einem zweiten dem Stator 10 abgewandten Teilbereich weisen die Entkopplungsringe 15 jedoch einen Außendurchmesser auf, der größer ist als der Außendurchmesser des Stators 10. Eine Fixierung der Entkopplungsringe 15 an dem Gehäuse 12 erfolgt ausschließlich in diesem zweiten Teilbereich 24 der Entkopplungsringe 15. Durch diese Ausgestaltung der Entkopplungsringe 15 wird die zuverlässige Fixierung und Zentrierung des Stators 10 im Gehäuse 12 einerseits und die ausreichende Entkopplung des Stators 10 andererseits mit einfachen Mitteln erreicht.

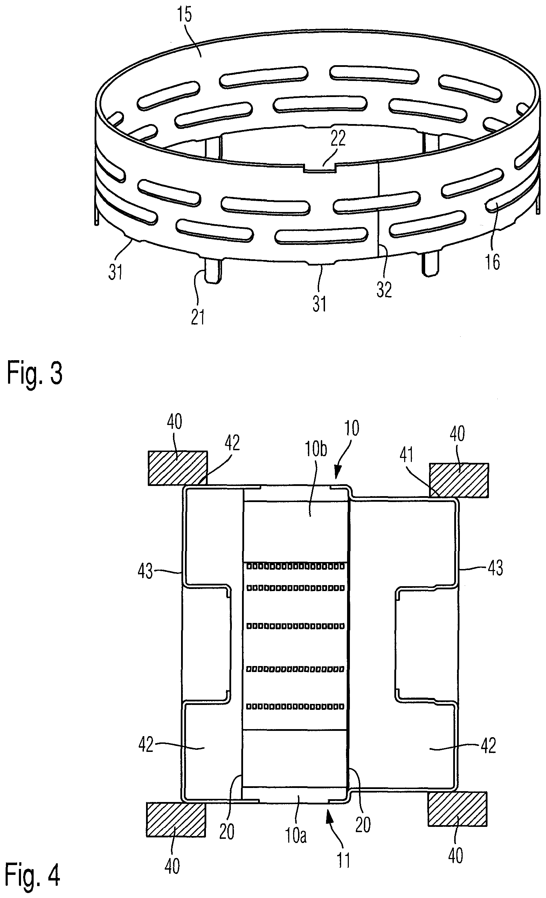

In Fig. 3 ist ein Entkopplungsring 15 einzeln in perspektivischer Ansicht dargestellt. Neben den bereits beschriebenen Merkmalen, sind dabei Anlageflächen 31 in Form von Erhebungen auf der dem Stator 10 zugewandten Stirnseite des Entkopplungsringes 15 erkennbar, an welchen der Entkopplungsring 15 an den Stator 10 angeschweißt wird. Das Anschweißen stellt dabei aber nur eine von mehreren möglichen Fixierungs- oder Befestigungsformen des Entkopplungsrings 15 an dem Stator 10 dar. Außerdem ist in Fig. 3 eine Verbindungsstelle 32 dargestellt, die zum Beispiel eine Schweißnaht sein könnte, wie sie sich in dieser oder ähnlicher Form ergibt, wenn der Entkopplungsring 15 als gestanztes und gerolltes Blechteil ausgeführt ist.

Fig. 4 zeigt eine zweite Ausführungsform der erfindungsgemäßen Anordnung, bei welcher der Elektromotor als sogenannter Einbaumotor ausgeführt ist, welcher zur Inbetriebnahme in eine dafür vorgesehene Einbaubohrung eingebaut wird. Im Gegensatz zu der in Fig. 1 dargestellten ersten Ausführungsform ist dabei kein Gehäuse in Form eines Topfgehäuses vorgesehen, sondern das Gehäuse wird sozusagen durch die Einbaubohrung gebildet. Dieses durch die Einbaubohrung gebildete Gehäuse 40 ist in Fig. 4 lediglich schematisch dargestellt durch vier quaderförmige Flächen in Teilbereichen 41 von Entkopplungsringen 42, in welchen die Entkopplungsringe 42 an dem Gehäuse 40 fixiert werden. Die Entkopplungsringe 42 sind analog der ersten Ausführungsform einerseits an einer Stirnseite 20 des Stators 10 befestigt und andererseits an dem Gehäuse 40 fixiert. Sie weisen auch analog zu der ersten Ausführungsform Aussparungen auf ihren Umfangsflächen auf, welche jedoch aus Gründen der Vereinfachung in Fig. 4 nicht dargestellt sind.

Der hinsichtlich der Erfindung wesentliche Unterschied der in Fig. 4 dargestellten Ausführungsform zu der in Fig. 1 dargestellten Ausführungsform besteht darin, dass die Entkopplungsringe 42 einstückig mit Lagerschilden 43 ausgeführt sind, welche jeweils ein nicht dargestelltes Lager der nicht dargestellten Motorwelle aufnehmen.

Insbesondere bei dieser Ausführungsform ist es vorteilhaft, die Entkopplungsringe 42 als Tiefziehteile auszuführen, da damit die insgesamt topfförmige Struktur der Entkopplungsringe 42 mit hoher Qualität und verhältnismäßig geringem Aufwand herstellbar ist.

Die bezüglich der ersten Ausführungsform der Erfindung gemachten Aussagen hinsichtlich Funktion, Anordnung, Ausgestaltung und Material der Entkopplungsringe 15 gelten für die Entkopplungsringe 42 gemäß der zweiten Ausführungsform in analoger Weise.

## Patentansprüche

1. Anordnung zur akustischen Entkopplung eines Stators (10) eines Elektromotors (11), die aufweist
- ein Gehäuse (12; 40),
- einen in dem Gehäuse (12; 40), konzentrisch zu einer drehbaren Motorwelle und beabstandet zu einer Innenwand (13) des Gehäuses (12; 40)
angeordneten Stator (10),
- einen in dem Gehäuse (12; 40) innerhalb des Stators (10) angeordneten und mit der Motorwelle drehfest verbundenen Rotor und
- zwei beidseitig des Stators (10) und konzentrisch zur Motorwelle angeordnete, im Wesentlichen zylinderförmige Entkopplungsringe (15; 42), welche einerseits jeweils an einer Stirnseite (20) des Stators (10) und andererseits jeweils an dem Gehäuse (12; 40) fixiert sind und auf ihren Umfangsflächen Aussparungen (16) aufweisen,
wobei sich die Entkopplungsringe (15; 42) an der Innenwand (13) des Gehäuses (12; 40) abstützen und den Stator (10) in Bezug auf die Innenwand (13) des Gehäuses (12; 40) zumindest im Wesentlichen zentriert positionieren,
wobei die Entkopplungsringe (15) in axialer Richtung der Motorwelle jeweils einen ersten dem Stator (10) zugewandten Teilbereich (23) aufweisen mit einem Außendurchmesser der kleiner oder gleich dem Außendurchmesser des Stators (10) ist, und einen zweiten dem Stator (10) abgewandten Teilbereich (24) mit einem Außendurchmesser, der größer als der Außendurchmesser des Stators (10) ist,
wobei eine Fixierung der Entkopplungsringe (15) an dem Gehäuse ausschließlich in diesem zweiten Teilbereich (24) der Entkopplungsringe erfolgt.

2. Anordnung nach Anspruch 1,
**dadurch gekennzeichnet,**
**dass** der Elektromotor (11) als bürstenloser, permanenterregter Elektromotor ausgeführt
ist, der insbesondere in Lenksystemen für Kraftfahrzeuge eingesetzt wird.

3. Anordnung nach einem Anspruch 1 oder 2,
**dadurch gekennzeichnet,**
**dass** die Aussparungen (16) gleichmäßig über die Umfangsfläche der Entkopplungsringe (15; 42) verteilt sind.

4. Anordnung nach einem der vorherigen Ansprüche,
**dadurch gekennzeichnet,**
**dass** die Aussparungen (16) in mehreren Spuren zueinander versetzt angeordnet sind.

5. Anordnung nach einem der vorherigen Ansprüche,
**dadurch gekennzeichnet,**
**dass** die Entkopplungsringe (15; 42) nur in einem Teilbereich (24; 41) Ihrer Umfangsfläche an dem Gehäuse (12; 40) fixiert sind.

6. Anordnung nach einem der vorherigen Ansprüche,
**dadurch gekennzeichnet,**
**dass** an den, dem Stator (10) zugewandeten Stirnseiten der Entkopplungsringe (15; 42) jeweils zumindest ein Zapfen (21) oder eine Nut vorgesehen ist, welcher in eine entsprechende Nut des Stators eingreift bzw. welche einen entsprechen Zapfen des Stators aufnimmt.

7. Anordnung nach einem der vorherigen Ansprüche,
**dadurch gekennzeichnet,**
**dass** an der, dem Stator (10) abgewandten Stirnseite zumindest eines Entkopplungsringes (15; 42) zumindest eine Nut (22) oder ein Zapfen vorgesehen ist, der einen entsprechenden Zapfen des Gehäuses aufnimmt bzw. in eine entsprechende Nut des Gehäuses eingreift.

8. Anordnung nach einem der vorherigen Ansprüche,
**dadurch gekennzeichnet,**
**dass** zumindest einer der Entkopplungsringe (15; 42) fest mit einem Lagerschild (17a; 17b; 43) verbunden ist, welches ein Lager der Motorwelle aufnimmt.

9. Anordnung nach Anspruch 8,
**dadurch gekennzeichnet,**
**dass** der zumindest einer der Entkopplungsringe (15; 42) einstückig mit dem Lagerschild (17a; 17b; 43) ausgeführt ist.

10. Anordnung nach einem der vorherigen Ansprüche,
**dadurch gekennzeichnet,**
**dass** zumindest einer der Entkopplungsringe (15; 42) als Blechteil ausgeführt ist.

11. Anordnung nach Anspruch 10,
**dadurch gekennzeichnet,**
**dass** zumindest einer der Entkopplungsringe (15; 42) als gestanztes und gerolltes Blechteil ausgeführt ist.

12. Anordnung nach Anspruch 10,
**dadurch gekennzeichnet,**
**dass** zumindest einer der Entkopplungsringe (15; 42) als Tiefziehteil ausgeführt ist.

## Claims

1. Arrangement for acoustic decoupling of a stator (10) of an electric motor (11), comprising
- a housing (12; 40),
- a stator (10) which is arranged in the housing (12; 40), so as to be concentric with a rotatable motor shaft and at a distance from an internal wall (13) of the housing (12; 40),
- a rotor which is arranged inside the stator (10) in the housing (12; 40) and connected rigidly to the motor shaft and
- two substantially cylindrical decoupling rings (15; 42) arranged on either side of the stator (10) and concentric with the motor shaft are each fixed both to an end face (20) of the stator (10) and to the housing (12; 40), having recesses (16) on the peripheral surfaces thereof,
wherein the decoupling rings (15; 42) abut against the internal wall (13) of the housing (12; 40) and position the stator (10) so as to be at least substantially centred with respect to the internal wall (13) of the housing (12; 40),
wherein the decoupling rings (15) each have a first sub-region (23) facing the stator (10) in the axial direction of the motor shaft, having an external diameter which is less than or equal to the external diameter of the stator (10), and a second sub-region (24) remote from the stator (10) with an external diameter which is greater than the external diameter of the stator (10),
wherein the decoupling rings (15) are fixed to the housing exclusively in this second sub-region (24) of the decoupling rings.

2. Arrangement according to claim 1, **characterised in that** the electric motor (11) is provided as a brushless, permanently excited electric motor which is used in particular in motor vehicle steering systems.

3. Arrangement according to claim 1 or 2, **characterised in that** the recesses (16) are evenly distributed over the peripheral surface of the decoupling rings (15; 42).

4. Arrangement according to any one of the preceding claims, **characterised in that** the recesses (16) are arranged mutually offset in a plurality of tracks.

5. Arrangement according to any one of the preceding claims, **characterised in that** the decoupling rings (15; 42) are fixed to the housing (12; 40) only in one sub-region (24; 41) of their peripheral surface.

6. Arrangement according to any one of the preceding claims, **characterised in that** on each of the end faces of the decoupling rings (15; 42) facing the stator (10) at least one pin (21) or one groove is provided which engages in a corresponding groove of the stator or receives a corresponding pin of the stator, as applicable.

7. Arrangement according to any one of the preceding claims, **characterised in that** at least one groove (22) or one pin is provided on the end face of at least one decoupling ring (15; 42) remote from the stator (10) and receives a corresponding pin of the housing or engages in a corresponding groove of the housing, as applicable.

8. Arrangement according to any one of the preceding claims, **characterised in that** at least one of the decoupling rings (15; 42) is rigidly connected to an end shield (17a; 17b; 43) which accommodates a bearing of the motor shaft.

9. Arrangement according to claim 8, **characterised in that** at least one of the decoupling rings (15; 42) is integral with the end shield (17a; 17b; 43).

10. Arrangement according to any one of the preceding claims, **characterised in that** at least one of the decoupling rings (15; 42) is a sheet metal part.

11. Arrangement according to claim 10, **characterised in that** at least one of the decoupling rings (15; 42) is a stamped and rolled sheet metal part.

12. Arrangement according to claim 10, **characterised in that** at least one of the decoupling rings (15; 42) is a deep-drawn part.

## Revendications

1. Agencement pour le découplage acoustique d'un stator (10) d'un moteur électrique (11), qui comporte
- une carcasse (12 ; 40),
- un stator (10) disposé dans la carcasse (12 ; 40), de manière concentrique par rapport à un arbre de moteur rotatif et espacée par rapport à une paroi intérieure (13) de la carcasse (12 ; 40),
- un rotor disposé dans la carcasse (12 ; 40) à l'intérieur du stator (10) et relié de manière solidaire en rotation à l'arbre de moteur et
- deux anneaux de découplage (15 ; 42) sensiblement cylindriques disposés des deux côtés du stator (10) et de manière concentrique par rapport à l'arbre de moteur, qui sont fixés d'un côté respectivement à un côté frontal (20) du stator (10) et de l'autre côté respectivement à la carcasse (12 ; 40) et qui comportent des évidements (16) sur leurs surfaces périphériques,
dans lequel les anneaux de découplage (15 ; 42) s'appuient à la paroi intérieure (13) de la carcasse (12 ; 40) et positionnent le stator (10) au moins sensiblement de manière centrale par rapport à la paroi intérieure (13) de la carcasse (12 ; 40),
les anneaux de découplage (15) comportant dans la direction axiale de l'arbre de moteur respectivement une première partie (23) faisant face au stator (10) avec un diamètre extérieur qui est inférieur ou égal au diamètre extérieur du stator (10), et une seconde partie (24) orientée dans la direction opposée au stator (10) avec un diamètre extérieur qui est supérieur au diamètre extérieur du stator (10),
une fixation des anneaux de découplage (15) à la carcasse se faisant exclusivement dans cette seconde partie (24) des anneaux de découplage.

2. Agencement selon la revendication 1, **caractérisé en ce que** le moteur électrique (11) est réalisé sous la forme d'un moteur à aimant permanent sans balai, qui est utilisé particulièrement dans les systèmes de direction pour véhicules automobiles.

3. Agencement selon la revendication 1 ou 2, **caractérisé en ce que** les évidements (16) sont répartis de manière homogène sur la surface périphérique des anneaux de découplage (15 ; 42).

4. Agencement selon l'une des revendications précédentes, **caractérisé en ce que** les évidements (16) sont disposés en plusieurs pistes de manière décalée entre eux.

5. Agencement selon l'une des revendications précédentes, **caractérisé en ce que** les anneaux de découplage (15 ; 42) sont fixés à la carcasse (12 ; 40) uniquement dans une partie (24 ; 41) de leur surface périphérique.

6. Agencement selon l'une des revendications précédentes, **caractérisé en ce que**, sur les côtés frontaux faisant face au stator (10) des anneaux de découplage (15 ; 42), est respectivement prévue au moins une languette (21) qui vient en prise dans au moins une rainure correspondante du stator ou au moins une rainure qui reçoit une languette correspondante du stator.

7. Agencement selon l'une des revendications précédentes, **caractérisé en ce que**, sur le côté frontal orienté dans la direction opposée au stator (10) d'au moins un anneau de découplage (15 ; 42), est prévue au moins une rainure (22) qui reçoit une languette correspondante de la carcasse ou au moins une languette qui vient en prise dans une rainure correspondante de la carcasse.

8. Agencement selon l'une des revendications précédentes, **caractérisé en ce qu'**au moins un des anneaux de découplage (15 ; 42) est relié solidement à une flasque (17a ; 17b ; 43) qui reçoit un palier de l'arbre de moteur.

9. Agencement selon la revendication 8, **caractérisé en ce qu'**au moins un des anneaux de découplage (15 ; 42) est réalisé d'un seul tenant avec la flasque (17a ; 17b ; 43).

10. Agencement selon l'une des revendications précédentes, **caractérisé en ce qu'**au moins un des anneaux de découplage (15 ; 42) est réalisé sous forme de tôle.

11. Agencement selon la revendication 10, **caractérisé en ce qu'**au moins un des anneaux de découplage (15 ; 42) est réalisé sous forme de tôle estampée et enroulée.

12. Agencement selon la revendication 10, **caractérisé en ce qu'**au moins un des anneaux de découplage (15 ; 42) est réalisé sous forme de pièce emboutie.
